# EUROPEAN PATENT APPLICATION

(11) **EP 2 735 953 A1**
(43) Date of publication of application: **28.05.2014**
(21) Application number: 12193588.6
(22) Date of filing: 21.11.2012
(51) Int. Cl.: G06F 3/0481

(54) **Display aparatus and method capable of controlling movement of cursor**

(71) Applicant: Samsung Electronics Co., Ltd, Gyeonggi-do 443-742 (KR)
(72) Inventor: Moon, Jong-bo, Gyeonggi-do (KR); Yoo, Ho-june, Seoul (KR); Kim, Byuk-sun, Seoul (KR); Kim, Yong-deok, Gyeonggi-do (KR); Lee, Hye-jeong, Seoul (KR); Choi, Sang-on, Gyeonggi-do (KR)
(74) Representative: Walaski, Jan Filip

(57) **Abstract**

A display apparatus and method capable of controlling the movement of a cursor are provided. The display apparatus includes an input unit which receives a cursor movement command; a display unit which displays a cursor and at least one object on a screen and moves the cursor in accordance with the cursor movement command; and a control unit which, in response to the cursor being placed in contact with the at least one object, controls the display unit to automatically move the cursor to a target point in the at least one object, wherein a size of the cursor varies depending on properties of the movement of the cursor. Therefore, it is possible to minimize the probability of a cursor mistakenly being moved to an object automatically against the intention of a user.

## Description

The present general inventive concept generally relates to a display apparatus and method, and more particularly, to a display apparatus and method capable of controlling the movement of a cursor.

A user may manipulate an input device such as a mouse to select an object from a plurality of objects displayed on the screen of a display apparatus. In response to the manipulation of the input device, the display apparatus may move a cursor to the selected object. When the cursor is placed within a predefined range of the selected object, the display apparatus may execute the selected object in response to the receipt of another manipulation from the user of the input device.

If there are only a few objects displayed on the screen of the display apparatus or the objects are properly arranged and spaced on the screen of the display apparatus, the user may easily place the cursor at any one of the objects.

However, if there are too many objects displayed on the screen of the display apparatus and the objects are displayed too densely in manner such that they overlap or are very close together on the screen of the display apparatus, the user may not be able to properly position the cursor to select each of the objects. Also, the user may often fail to properly select a desired object, and even end up mistakenly selecting a non-desired obj ect.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a display apparatus and method to facilitate the movement of a cursor for selecting a plurality of objects displayed on the screen of the display apparatus.

According to an aspect of the exemplary embodiments, a display apparatus includes: an input unit which receives a cursor movement command from a user; a display unit which displays a cursor and an object on a screen and moves the cursor in accordance with the cursor movement command; and a control unit which, in response to the cursor being placed in contact with the object, controls the display unit to automatically move the cursor to a target point in the object, wherein a size of the cursor varies based on properties of the movement of the cursor.

The display apparatus may also include a storage unit which stores a threshold size for the cursor, wherein the control unit determines whether the size of the cursor is less than the threshold size when the cursor is placed in contact with the object.

The storage unit may also store a threshold moving speed for the cursor. If the size of the cursor when the cursor is placed in contact with the object is less than the threshold size, the control unit may determine whether a user intends to access the object by determining whether a moving speed of the cursor is less than the threshold moving speed.

If the control unit determines the user intends to access the object, the control unit may move the cursor to a target point in the object in accordance with whether an angle between a direction of the movement of the cursor and a direction from a center of the cursor to a point of contact between the cursor and the object is less than a threshold angle.

The threshold angle may be 90°.

The cursor may be a bubble cursor whose size varies depending on a distance from the obj ect.

If a second cursor movement command is received when the cursor is placed within the object, the control unit may control the display unit to move the cursor out of the object or to continue to fix the cursor within the object in accordance with whether a distance to be travelled by the cursor based on the second cursor movement command is less than a threshold distance.

According to another aspect of the exemplary embodiments, a method of controlling a cursor for selecting an object displayed on a screen of a display apparatus includes: receiving a cursor movement command; moving the cursor in accordance with the cursor movement command and in response to the cursor being placed in contact with the object, determining the intended movement of the cursor based on properties of the movement of the cursor; and automatically moving the cursor to a target point in the object based on a result of the determining, wherein a size of the cursor varies based on the properties of the movement of the cursor.

The determining may include: determining whether the intended movement of the cursor is placed in contact with the object; if the cursor is determined to be placed in contact with the object, determining whether the size of the cursor is less than a threshold size; and if the size of the cursor is less than the threshold size, determining whether a moving speed of the cursor is less than a threshold moving speed.

The automatically moving the cursor to a target point may include: if the size of the cursor is less than the threshold size and the moving speed of the cursor is less than the threshold moving speed, calculating an angle between a direction of the movement of the cursor and a direction from a center of the cursor to a point of contact between the cursor and the object; determining whether the calculated angle is less than a threshold angle; if the calculated angle is determined to be less than the threshold angle, setting the target point in the object; and automatically moving the cursor to the set target point.

The threshold angle may be 90°.

The cursor may be a bubble cursor whose size varies based on a distance from the obj ect.

The method may also include, if a second cursor movement command is received when the cursor is placed within the object, moving the cursor out of the object or continuing to fix the cursor within the object in accordance with whether a distance to be travelled by the cursor based on the another cursor movement command is less than a threshold distance.

According to another aspect of the exemplary embodiments, a method of controlling a cursor for selecting an object displayed on a screen of a display apparatus includes: moving the cursor in accordance with a movement command; and when the cursor is placed in contact with the object, determining an intended movement of the cursor based on whether a size of the cursor is less than a threshold size and a speed of the cursor is less than a threshold speed; and automatically moving the cursor to a target point in the object based on a result of the determining.

As described above, it is possible to facilitate the movement of a cursor and thus to facilitate the selection and execution of an object from among a plurality of objects displayed on the screen of a display apparatus. In addition, it is possible to minimize the probability of a cursor mistakenly being automatically moved to an object not intended by the user by determining the movement of the cursor intended by the user based on the size and the moving speed of the cursor.

The above and/or other aspects will be more apparent by describing certain exemplary embodiments with reference to the accompanying drawings, in which:
FIG. 1 is a block diagram illustrating a display apparatus according to an exemplary embodiment;
FIG. 2 is a diagram illustrating an example of determining the intended movement of a cursor to an object, as performed in a display apparatus according to an exemplary embodiment;
FIG. 3 is a diagram illustrating an example of automatically moving a cursor to a target point of an object with the use of an angle between the cursor and the object, as performed in a display apparatus according to an exemplary embodiment;
FIG. 4 is a diagram illustrating an example of setting a target point for fixing a cursor within an object, as performed in a display apparatus according to an exemplary embodiment;
FIG. 5 is a diagram illustrating another example of setting a target point for fixing a cursor within an object, as performed in a display apparatus according to an exemplary embodiment;
FIG. 6 is a flowchart illustrating a method of controlling a cursor for selecting an object, according to an exemplary embodiment;
FIG. 7 is a flowchart illustrating a method of determining the intended movement of a cursor to an object based on the properties of the movement of the cursor, according to an exemplary embodiment; and
FIG. 8 is a flowchart illustrating a method of automatically moving a cursor that is determined to access an object to a target point of the object, according to an exemplary embodiment.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

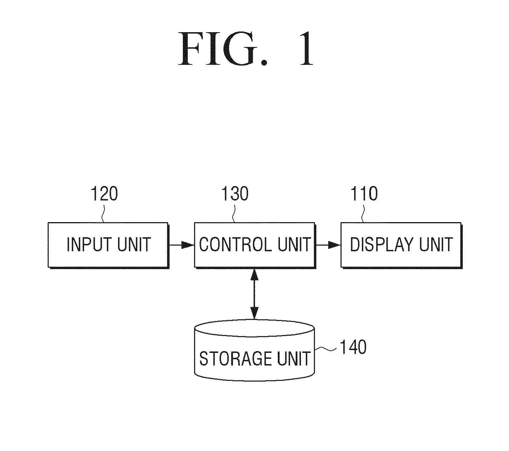

FIG. 1 is a block diagram illustrating a display apparatus according to an exemplary embodiment.

Referring to FIG. 1, the display apparatus may be a device capable of accessing the Internet. The display apparatus includes a display unit 110, an input unit 120, and a control unit 130.

The display unit 110 may display at least one object, which may be provided by a web page, on a screen. The display unit 110 may also display a cursor for selecting the object on the screen. The cursor may be a bubble cursor whose size varies depending on the distance from the object.

The input unit 120 may receive a cursor movement command, which is a command to move the cursor to select the object. For example, a user may manipulate an external input device such as a mouse to select the object from the screen, thereby issuing the cursor movement command. In response to the receipt of the cursor movement command via the external input device, the input unit 120 may move the cursor to the object in accordance with the cursor movement command.

In a case in which the cursor is moved toward and placed in contact with the object, the control unit 130 may control the display unit 110 to automatically move the cursor to a target point inside the object based on the properties of the movement of the cursor. The properties of the movement of the cursor may include, but are not limited to, a direction of the movement of the cursor and a speed of the movement of the cursor. The size of the cursor may be configured to vary depending on the direction and the speed of the movement of the cursor. The control unit 130 may control the display unit 110 to move the cursor to the target point and fix the cursor onto the target point.

To determine whether to automatically move the cursor into the object, the control unit 130 may determine the intended movement of the cursor according to a set of rules.

More specifically, the control unit 130 may determine whether the size of the cursor is less than a threshold size previously stored in the storage unit 140. If the size of the cursor is less than the threshold size, the control unit 130 may determine whether the speed of the movement of the cursor is less than a threshold speed previously stored in the storage unit 140, and may determine the intended movement of the cursor based on the result of the determination. For example, if the size of the cursor is less than the threshold size or the speed of the movement of the cursor is less than the threshold speed, the control unit 130 may determine the user intends to access the object from movement of the cursor.

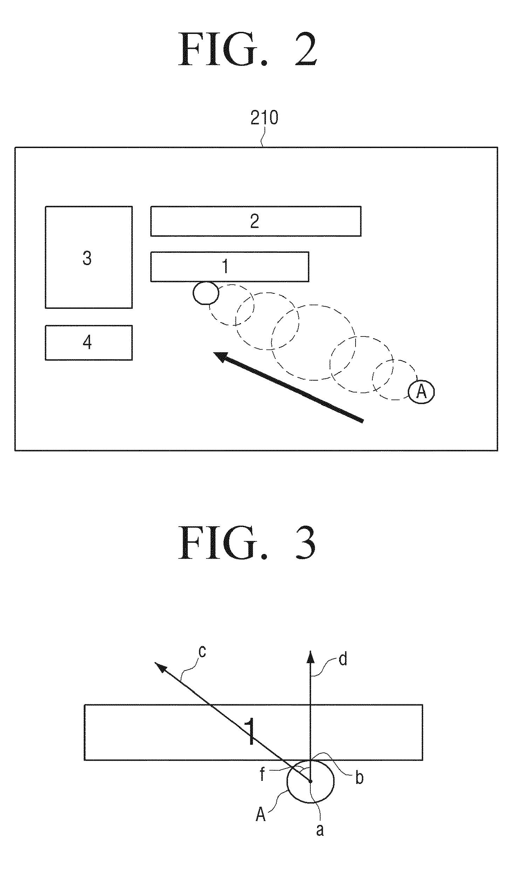

An example of determining the intended movement of a cursor based on the size and the moving speed of the cursor is described with reference to FIG. 2.

FIG. 2 is a diagram illustrating an example of determining the intended movement of a cursor to an object, as performed in a display apparatus according to an exemplary embodiment. Referring to FIG. 2, in response to a user's manipulation of an external input device (not illustrated) when a plurality of first to fourth objects 1 to 4 and a cursor A are displayed on a screen 210 of the display unit 110, the input unit 120 may receive a cursor movement command from the external input device. The display unit 110 may move the cursor A toward one of the objects 1 to 4, for example, the first object 1, from a "four o'clock" direction to a "ten o'clock" direction in accordance with the cursor movement command.

The cursor A may initially have a size of 1. As the cursor A is moved toward the first object 1, the size of the cursor A may vary in the order of 1, 2, 3, 4, 3, 2, and 1. That is, the size of the cursor A may incrementally increase to some extent as the cursor A becomes close to the first object 1 and may then incrementally decrease as the cursor A becomes even closer to the first object 1. When the cursor A is placed in contact with the first object 1, the control unit 130 may determine the intended movement of the cursor A based on the size of the cursor A when the cursor A is in contact with the first object 1 and the moving speed of the cursor A.

More specifically, if the size of the cursor A when the cursor A is in contact with the first object 1 is less than a threshold size and the moving speed of the cursor A is less than a threshold speed, the control unit 130 may determine the user intends to access the first object 1 from the movement of the cursor A.

Alternatively, if at least one of the size of the cursor A when the cursor A is in contact with the first object 1 and the moving speed of the first object 1 is greater than its respective threshold, the control unit 130 may determine the user does not intend to access the first object 1 from the movement of the cursor A.

According to this exemplary embodiment, a determination may be made as to whether a cursor is being moved with the intention of accessing an object based on the size and the moving speed of the cursor. Therefore, it is possible to minimize the probability of a cursor mistakenly being moved to an object automatically against the intention of a user as if a "gravitational pull" were added to the cursor.

The control unit 130 may determine whether the user intends to access an object based on the size and the moving speed of the cursor, and may finalize its determination regarding the intention of the user based on the angle between the direction of the movement of the cursor and a point of contact between the cursor and the object. Accordingly, it is possible to further decrease the probability of the cursor being mistakenly moved to the object automatically against the intention of a user. More specifically, in response to determining the user intends to access an object based on the size and the moving speed of the cursor, the control unit 130 may calculate the angle between the direction of the movement of the cursor and a point of contact between the cursor and the object. The control unit 130 may determine whether the angle between the direction of the movement of the cursor and the point of contact between the cursor and the object is less than a threshold angle, and may automatically place the cursor at a target point inside the object based on the result of the determination. For example, the threshold angle may be 90°.

If the angle between the direction of the movement of the cursor and the point of contact between the cursor and the object is determined to be less than the threshold angle, the control unit 130 may set a target point in the object. The target point may be set in consideration of the shape of the object and the location of the point of contact between the cursor and the object. For example, if the object is in the shape of a regular square, the control unit 130 may set the center of the object as the target point. Alternatively, if the object is in a rectangular shape, the control unit 130 may set a point in the object relevant to the point of contact between the cursor and the object as the target point.

An example of automatically moving a cursor to a target point in an object in consideration of the angle between the cursor and the object is described with reference to FIG. 3.

FIG. 3 is a diagram illustrating an example of automatically moving a cursor to a target point in an object in consideration of the angle between the cursor and the object, as performed in a display apparatus according to an exemplary embodiment.

Referring to FIG. 3, the control unit 130 may vary the size of the cursor A in accordance with a cursor movement command input via the input unit 120. In response to the cursor A being placed in contact with the first object 1, the control unit 130 may compare the size and the moving speed of the cursor A with their respective thresholds. In a case in which the size and the moving speed of the cursor A are both less than their respective thresholds, the control unit 130 may calculate an angle "f" between a direction "c" and a direction "d."

The direction "c" may be a direction of the movement of the cursor A. For example, the direction "c" may be a direction of movement from a "four o'clock" direction to a "ten o'clock" direction. The direction "d" may be a direction from a center "a" of the cursor A to a point "b" of contact between the cursor A and the first object 1. If the angle" f" is less than a threshold angle, the control unit 130 may set a target point in the object 1 and may automatically move the cursor A to the target point.

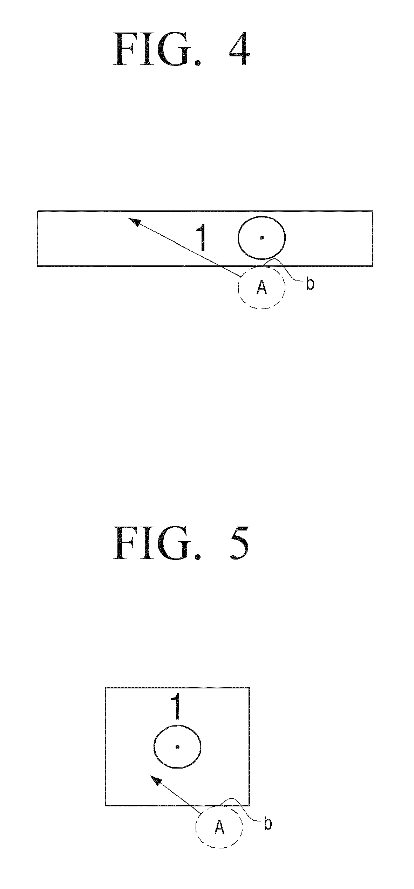

The setting of a target point in an object may be performed in various manners in consideration of the shape of the object and the location of a point of contact between a cursor and the object. Examples of setting a target point in an object are described with reference to FIGS. 4 and 5.

FIG. 4 is a diagram illustrating an example of setting a target point for fixing a cursor within an object, as performed in a display apparatus according to an exemplary embodiment. Referring to FIG. 4, if the angle "f" between the direction "c" of the movement of the cursor A and a direction "d" from the center "a" of the cursor A to the contact point "b" is less than the threshold angle, the control unit 130 may set a target point for fixing the cursor A within the first object 1 in consideration of the shape of the first object 1 and the location of the contact point "b."

More specifically, the control unit 130 may determine the shape of the first object 1, which is placed in contact with the cursor A. For example, referring to FIG. 4, the first object 1 may be in a rectangular shape. In this example, if the contact point b has a value of α on the X axis, the control unit 130 may set a point having the value of α on the X axis and a value of o on the Y axis as a target point. Then, the control unit 130 may automatically move and fix the cursor A to the target point.

FIG. 5 is a diagram illustrating an example of setting a target point for fixing a cursor within an object, as performed in a display apparatus according to an exemplary embodiment. Referring to FIG. 5, if the angle "f" between the direction "c" of the movement of the cursor A and a direction "d" from the center "a" of the cursor A to the contact point "b" is less than the threshold angle, the control unit 130 may set a target point for fixing the cursor A within the first object 1 in consideration of the shape of the first object 1 and the location of the contact point b.

More specifically, the control unit 130 may determine the shape of the first object 1, which is placed in contact with the cursor A. For example, referring to FIG. 5, the first object 1 may be in the shape of a regular square. In this example, the control unit 130 may set the center of the first object 1, which has a value of o on both the X- and Y-axes, as a target point. Then, the control unit 130 may automatically move and fix the cursor A to the target point.

Alternatively, the control unit 130 may set a point having a value of α on the X axis and a value of o on the Y axis as the target point in consideration that the contact point b has the value of α on the X axis.

If a cursor movement command is received via the input unit 120 when the cursor A is fixed at the target point in the first object 1, the control nit 130 may determine whether a distance travelled by the cursor A in accordance with the cursor movement command is less than a threshold distance. If the distance travelled by the cursor A in accordance with the cursor movement command is less than the threshold distance, the control unit 130 may control the cursor A to continue to be fixed at the target point in the first object 1. Alternatively, if the distance travelled by the cursor A in accordance with the cursor movement command is greater than the threshold distance, the control unit 130 may control the cursor A to be moved out of the first object 1. In short, the control unit 130 may decide whether to fix the cursor A inside the first object 1 or move the cursor A out of the first object 1 based on whether the distance travelled by the cursor A in accordance with a cursor movement command exceeds the threshold distance.

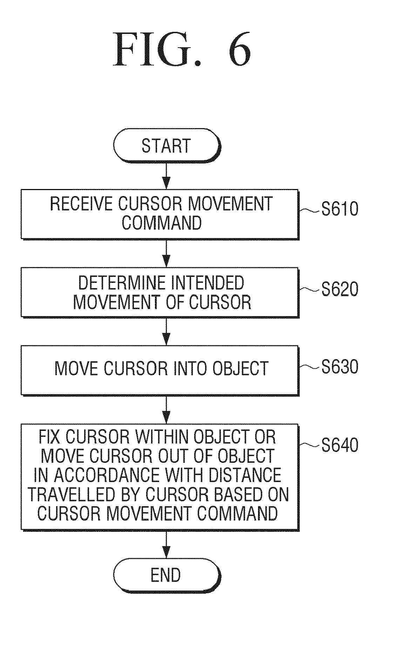

Examples of determining the intended movement of a cursor based on the properties of the movement of the cursor and automatically moving the cursor to an object are described with reference to FIGS. 6 to 8.

FIG. 6 is a flowchart illustrating a method of controlling a cursor for selecting an object, according to an exemplary embodiment. Referring to FIG. 6, a display apparatus may display at least one object, which is provided by a web page, on a screen. The display apparatus may also display a cursor for selecting the object on the screen. For example, the cursor may be a bubble cursor whose size varies depending on the distance from the obj ect.

In operation S610, the display apparatus may receive a cursor movement command, which is a command to move the cursor, via an external input device such as, for example, a mouse. In response to the receipt of the cursor movement command, the display apparatus may move the cursor to an area in which the object is displayed. In operation S620, in response to the cursor being placed in contact with the object, the display apparatus may determine whether the user intends to access the object based on the properties of the movement of the cursor. For example, the properties of the movement of the cursor may include a direction and a speed of the movement of the cursor. The size of the cursor may vary depending on the direction and the speed of the movement of the cursor.

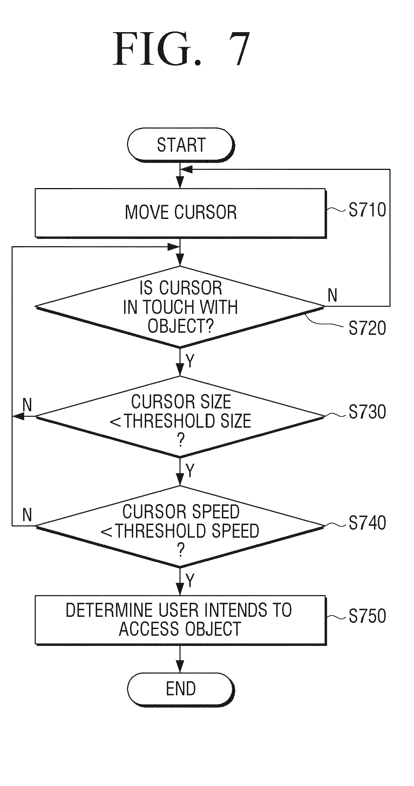

In the exemplary embodiment illustrated in FIG. 7, the display apparatus may determine the intended movement of the cursor based on the properties of the movement of the cursor.

FIG. 7 is a flowchart illustrating a method of determining the intended movement of a cursor based on the properties of the movement of the cursor, according to an exemplary embodiment. Referring to FIG. 7, in operation S710, in response to the movement of a cursor toward an object, in operation S720, a display apparatus may determine whether the cursor is placed in contact with the object. In operation S730, if the cursor is determined to be placed in contact with the object, the display apparatus may determine whether the size of the cursor is less than a threshold size. If the size of the cursor is determined to be greater than the threshold size, the display apparatus may determine that the user does not intend to access the object.

In operation S740, if the size of the cursor is determined to be less than the threshold size, the display apparatus may determine whether the moving speed of the cursor is less than a threshold speed. If the moving speed of the cursor is determined to be greater than the threshold speed, the display apparatus may determine that the user does not intend the movement of the cursor to access the object.

In operation S750, if the moving speed of the cursor is determined to be less than the threshold speed, the display apparatus may determine that the user intends to access the object.

For example, the cursor may initially have a size of 1, and the size of the cursor may vary in the order of 1, 2, 3, 4, 3, 2, and 1 as the cursor is being moved toward to the object, as illustrated in FIG. 2. That is, the size of the cursor may incrementally increase to some extent as the cursor becomes close to the object, and may then incrementally decrease as the cursor becomes even closer to the object. When the cursor is placed in contact with the object, the display apparatus may determine whether the user intends to access the object based on the size of the cursor, when the cursor is in contact with the object, and the moving speed of the cursor. This example has already been described in detail with reference to FIG. 2, and thus, a detailed description will be omitted.

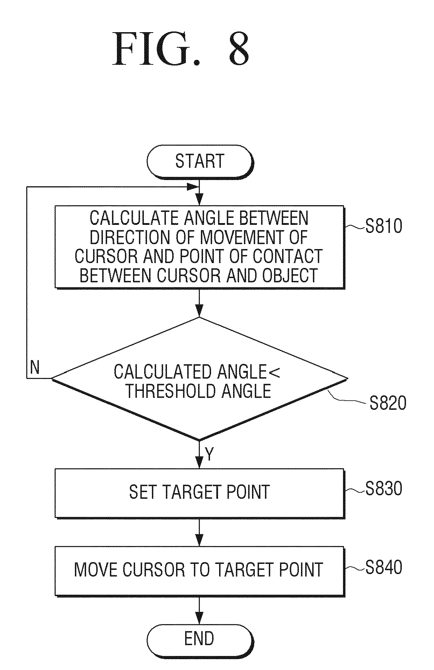

If the size of the cursor when the cursor is in contact with the object and the moving speed of the cursor are less than their respective thresholds, the display apparatus may determine that the user intends to access the object. Then, the display apparatus may automatically move the cursor to a target point in the object. An example of automatically moving a cursor to a target point in an object, as performed in a display apparatus according to an exemplary embodiment, is described with reference to FIG. 8.

FIG. 8 is a flowchart illustrating a method of automatically moving a cursor to a target point in an object, according to an exemplary embodiment. Referring to FIG. 8, in operation S810, if the user is determined, by using, for example, the method illustrated in FIG. 7, to have the intention of accessing an object, a display apparatus may calculate an angle between a direction of the movement of the cursor and a direction from the center c of the cursor to a point of contact between the cursor and the object. For example, referring to FIG. 3, the display apparatus may calculate the angle f between the direction c and the direction d. The direction c may correspond to a direction of the movement of the cursor. The direction d may correspond to a direction from the center c of the cursor to the point of contact between the cursor and the object.

In operation S820, the display apparatus may determine whether the angle f is less than a threshold angle. For example, the threshold angle may be 90°.

If the angle f is determined to be greater than the threshold angle, the display apparatus may control the cursor not to enter the object. Alternatively, in operation S830, if the angle f is determined to be less than the threshold angle, the display apparatus may set a target point in the object. In operation S840, the display apparatus may control the cursor to automatically move to the target point in the object. The setting of the target point in the object may be performed in various manners which consider the shape of the object and the point of contact between the cursor and the object.

For example, the object may be in a rectangular shape. In this example, if the contact point b has a value of α on the X axis, the display apparatus may set a point having the value of α on the X axis and a value of o on the Y axis as the target point. Then, the display apparatus may automatically move and fix the cursor to the target point.

In another example, the object may be in the shape of a regular square. In this example, the display apparatus may set the center of the object as the target point regardless of the location of the point of contact between the cursor and the object. Then, the display apparatus may automatically move and temporarily fix the cursor to the target point.

Alternatively, even in a case in which the object is in the shape of a regular square, the display apparatus may set a point having the same X coordinate value as the point of contact between the cursor and the object and having a value of o on the Y axis as the target point, and may automatically move and fix the cursor to the target point.

In response to the receipt of a cursor movement command via an external input device after the setting of the target point in the object, the display apparatus may decide whether to move the cursor out of the object or continue to fix the cursor at the target point based on whether a distance travelled by the cursor in accordance with the cursor movement command exceeds a threshold distance. For example, if a cursor movement command is received via the external input device when the cursor is fixed at the target point, the display apparatus may compare a distance travelled by the cursor in accordance with the received cursor movement command with a threshold distance. If the result of the comparison indicates that the distance travelled by the cursor in accordance with the received cursor movement command exceeds the threshold distance, the display apparatus may move the cursor out of the object.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, while not required in all aspects, one or more units of the display apparatus can include a processor or microprocessor executing a computer program stored in a computer-readable medium.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the invention which is defined in the claims. Many alternatives, modifications, and variations will be apparent to those skilled in the art.

## Claims

1. A display apparatus comprising:
an input unit which receives a movement command from a user;
a display unit which displays a cursor and a plurality of objects on a screen; and
a control unit which, in response to the cursor being placed in contact with a first object among the plurality of objects, controls the display unit to automatically move the cursor to a target point in the first object,
wherein a size of the cursor varies based on a distance between at least one object among the plurality of objects and the cursor.

2. The display apparatus of claim 1, further comprising:
A storage unit which stores a threshold moving speed for the cursor,
wherein the control unit determines whether to move the cursor to a target point in the first object depending on whether a moving speed of the cursor is less than a threshold moving speed stored in the storage unit.

3. The display apparatus of claim 2, wherein the storage unit further stores a threshold size for the cursor,
wherein the control unit determines whether to move the cursor to a target point in the first object depending on whether a size of the cursor is less than the threshold size stored in the storage unit.

4. The display apparatus of claim 3, wherein, upon determining whether to automatically move the first object,
the control unit moves the cursor to a target point in the first object in accordance with whether an angle between a direction of the movement of the cursor and a direction from a center of the cursor to a point of contact between the cursor and the first object is less than a threshold angle.

5. The display apparatus of claim 4, wherein the threshold angle is 90°.

6. The display apparatus of claim 1, wherein the cursor is a bubble cursor.

7. The display apparatus of claim 1, wherein, if a second movement command is received when the cursor is placed within the first object, the control unit controls the display unit to move the cursor out of the first object or to continue to fix the cursor within the first object in accordance with whether a distance to be travelled by the cursor based on the second movement command is less than a threshold distance.

8. A method of controlling a cursor for selecting an object displayed on a screen of a display apparatus, the method comprising:
receiving a movement command;
moving the cursor in accordance with the movement command; and
in response to the cursor being placed in contact with a first object among the plurality of objects, determining whether to automatically move the cursor to a target point in the first object; and
automatically moving the cursor to a target point in the first object based on a result of the determining,
wherein a size of the cursor varies based on a distance between the first object and the cursor.

9. The method of claim 8, wherein the determining the intended movement of the cursor comprises:
determining whether the cursor is placed in contact with the first object;
if the cursor is determined to be placed in contact with the first object, determining whether the size of the cursor is less than a threshold size; and
if the size of the cursor is less than the threshold size, determining whether a moving speed of the cursor is less than a threshold moving speed.

10. The method of claim 9, wherein the automatically moving the cursor to a target point comprises:
if the size of the cursor is less than the threshold size and the moving speed of the cursor is less than the threshold moving speed, calculating an angle between a direction of the movement of the cursor and a direction from a center of the cursor to a point of contact between the cursor and the first object;
determining whether the calculated angle is less than a threshold angle;
if the calculated angle is determined to be less than the threshold angle, setting the target point in the first object; and
automatically moving the cursor to the set target point.

11. The method of claim 10, wherein the threshold angle is 90°.

12. The method of claim 8, wherein the cursor is a bubble cursor.

13. The method of claim 8, further comprising:
if a second movement command is received when the cursor is placed within the first object, moving the cursor out of the first object or continuing to fix the cursor within the first object in accordance with whether a distance to be travelled by the cursor based on the second movement command is less than a threshold distance.
